# EUROPÄISCHE PATENTSCHRIFT

(11) **EP 1 519 492 B1**
(45) Veröffentlichungstag und Bekanntmachung des Hinweises auf die Patenterteilung: **23.06.2010**
(21) Anmeldenummer: 04103782.1
(22) Anmeldetag: 06.08.2004
(51) Int. Cl.: H04B 1/10

(54) **Rundfunkempfänger für den Mehrantennenempfang**
Radio receiver for reception with multiple antennae
Récepteur pour réception avec plusieurs antennes

(30) Priorität: 23.09.2003 DE 10344298
(43) Veröffentlichungstag der Anmeldung: 30.03.2005
(73) Patentinhaber: SIEMENS AKTIENGESELLSCHAFT, 80333 München (DE)
(72) Erfinder: Bänziger, Christiaan Marie Hubertus, 6041 PD Roermond (NL); Meijer, Pieter, 5625 ER Eindhoven (NL); Schlösser, Theodoor Antoon Jozef, 5655 JW Eindhoven (NL)

(56) Entgegenhaltungen:
- DE-A- 19 708 996
- US-A- 3 798 547
- US-A1- 2002 183 087

## Beschreibung

Die Erfindung betrifft einen Rundfunkempfänger für den Mehrantennenempfang mit mindestens zwei RF-Empfängern sowie ein Verfahren zur Erzeugung von Zwischenfrequenzsignalen in einem solchen Rundfunkempfänger.

Beim Empfang von Rundfunksignalen in einem sich bewegenden Kraftfahrzeug treten fortlaufend Änderungen der Empfangsverhältnisse auf. Insbesondere kann der Rundfunkempfang durch den so genannten Mehrwegeempfang gestört sein. Mehrwegeempfang wird durch Signalreflexionen erzeugt, die beispielsweise an Gebäuden, Bergen, Bäumen etc. erfolgen können. Das an einem bestimmten Ort empfangene Rundfunksignal besteht daher aus einer Überlagerung dieser unterschiedlichen Teilsignale, die hinsichtlich Amplitude und Phasenlage variieren. Diese Überlagerung der unterschiedlichen Teilsignale in der Antenne kann zu einer Schwächung oder auch zu einer kompletten Auslöschung des gewünschten Rundfunksignals durch Interferenz führen. Es hat sich gezeigt, dass die Empfangsverhältnisse innerhalb kürzester Distanzen stark variieren können. Um diesem Effekt entgegenzuwirken, sind verschiedene so genannte Antennen-Diversity-Verfahren bekannt, die Antennensignale von mehreren Antennen nutzen. Beim so genannten Scanning-Antenna-Diversity-Verfahren wird das jeweils stärkste Antennensignal dem Rundfunkempfänger zugeführt. Beim so genannten Phase-Diversity-Verfahren wird der Empfang unter Mehrwegebedingungen dadurch verbessert, dass die Antennensignale von zwei oder auch mehr räumlich getrennten Antennen nach Anpassung der Phase und Amplitude der empfangenen Signale kombiniert werden. In der nicht vorveröffentlichten Europäischen Patentanmeldung Nr. 030 08 901.5 der Anmelderin wird ein Verfahren zum Betreiben einer Antennen-Diversity-Schaltung eines Rundfunkempfängers und ein Rundfunkempfänger beschrieben, bei denen zwischen einem Scanning-Antenna-Diversity-Verfahren und einem Phase-Diversity-Verfahren umgeschaltet werden kann.

Zur Durchführung eines derartigen Phase-Diversity-Verfahrens werden zwei identische RF-Empfänger benötigt, die mit jeweils unterschiedlichen Antennen verbunden, jedoch auf die gleiche Empfangsfrequenz abgestimmt sind. Das Zwischenfrequenzsignal der beiden RF-Empfänger wird nach Anpassung von Phase und Amplitude und anschließender Digitalisierung derart kombiniert, dass die Einflüsse des Mehrwegeempfangs eliminiert werden. Die RF-Empfänger enthalten in bekannter Weise Mischer zur Erzeugung der Zwischenfrequenz, denen neben dem Antennensignal in bekannter Weise ein Referenzsignal eines Oszillators zugeführt wird. Da beide RF-Empfänger zur Durchführung des Phase-Diversity-Verfahrens auf die gleiche Frequenz abgestimmt sind, sind auch die Oszillatoren zur Bereitstellung der Referenzfrequenz auf dieselbe Frequenz eingestellt. Dies führt dazu, dass unerwünschte Kopplungen und Interferenzen auftreten. Erschwerend kommt hinzu, dass die beiden RF-Empfänger räumlich dicht zueinander angeordnet sind.

Wird der Rundfunkempfänger mit den beiden RF-Empfängern als reiner Phase-Diversity-Empfänger betrieben, so kann das Problem der Kopplung und Interferenzen prinzipiell durch Verwendung eines einzigen Oszillators eliminiert werden. In modernen Autoradios werden Rundfunkempfänger mit zwei RF-Empfängern jedoch auch in einem anderen Betriebsmodus eingesetzt, bei dem die Empfänger auf verschiedene Empfangsfrequenzen eingestellt sind, nämlich auf eine erste Empfangsfrequenz zum Empfang eines wiederzugebenden Rundfunkprogramms und auf eine zweite Empfangsfrequenz zum Empfang von weiteren Informationen eines Radio-Daten-Systems wie RDS oder TMC. In einem solchen Fall müssen die beiden RF-Empfänger auch auf verschiedene Empfangsfrequenzen einstellbar sein, so dass die ausschließliche Verwendung eines einzigen Oszillators für beide RF-Empfänger ausscheidet.

Die Offenlegungsschrift DE 197 08 996 A1 zeigt ein Funkverkehrsgerät mit Kombinationsdiversity.

Aufgabe der Erfindung ist es daher, einen Rundfunkempfänger mit zwei RF-Empfängern anzugeben, mit dem die oben genannten Probleme von Kopplungen und Interferenzen vermieden werden und der auch auf zwei unterschiedlichen Empfangsfrequenzen betrieben werden kann. Eine weitere Aufgabe der Erfindung besteht darin, ein Verfahren zur Erzeugung von Zwischenfrequenzsignalen in Rundfunkempfängern für Mehrantennenempfang mit mindestens zwei RF-Empfängern anzugeben, das die oben genannten Probleme hinsichtlich von Signalkopplungen und Interferenzen vermeidet.

Die erstgenannte Aufgabe wird erfindungsgemäß gelöst durch einen Rundfunkempfänger für den Mehrantennenempfang mit
- einem ersten RF-Empfänger, der
   - mit einer ersten Antenne verbindbar ist und
   - einen ersten Mischer zur Erzeugung eines Zwischenfrequenzsignals aus einem ersten Antennensignal und einem ersten Referenzsignal sowie
   - einen ersten Oszillator und einen ersten Frequenzteiler zur Erzeugung der ersten Referenzfrequenz für den ersten Mischer aufweist und
- einem zweiten RF-Empfänger, der
   - mit einer zweiten Antenne verbindbar ist und
   - einen zweiten Mischer zur Erzeugung eines zweiten Zwischenfrequenzsignals aus einem zweiten Antennensignal und einem zweiten Referenzsignal sowie
   - einen zweiten Oszillator und einen zweiten Frequenzteiler zur Erzeugung der zweiten Referenzfrequenz für den zweiten Mischer aufweist,
wobei
- die Frequenzen des ersten und des zweiten Oszillators voneinander verschieden sind und
- die Teilungsverhältnisse des ersten und des zweiten Frequenzteilers derart voneinander verschieden sind, dass die erste und die zweite Referenzfrequenz gleich sind.

Die zweit genannte Aufgabe wird gelöst durch ein Verfahren zur Erzeugung von Zwischenfrequenzen (ZF) in Rundfunkempfängern für Mehrantennenempfang mit mindestens zwei RF-Empfängern, wobei ein erstes Antennensignal einem ersten Mischer zur Erzeugung eines ersten Zwischenfrequenzsignals und ein zweites Antennensignal einem zweiten Mischer zur Erzeugung eines zweiten Antennensignals zugeführt wird, ein von einem ersten Oszillator und einem ersten Frequenzteil generiertes erstes Referenzfrequenzsignal dem ersten Mischer zugeführt wird, ein von einem zweiten Oszillator und einem zweiten Frequenzteiler generiertes zweites Referenzfrequenzsignal dem zweiten Mischer zugeführt wird, die Signalfrequenz des ersten und des zweiten Oszillators voneinander verschieden sind und im ersten und im zweiten Frequenzteiler voneinander verschiedene Teilungsverhältnisse derart eingestellt werden, dass das erste und das zweite Referenzfrequenzsignal dieselbe Frequenz aufweisen.

Obwohl beide RF-Empfänger auf die gleiche Empfangsfrequenz eingestellt werden und somit beiden Mischern dieselbe Referenzfrequenz zugeführt werden muss, werden erfindungsgemäß die Oszillatoren zur Generierung der Referenzfrequenz auf unterschiedliche Frequenzen eingestellt. Hierdurch werden Interferenzen vermieden. Um nun den beiden Mischern die gleiche Referenzfrequenz zur Verfügung stellen zu können, sind den Oszillatoren Frequenzteiler nachgeschaltet, deren Teilerverhältnisse so eingestellt werden, dass an den Mischern die gleiche Referenzfrequenz anliegt. Durch die Verwendung von zwei Oszillatoren können die beiden RF-Empfänger zudem auch auf unterschiedliche Empfangsfrequenzen eingestellt werden.

Bei dem ersten und dem zweiten Oszillator handelt es sich vorzugsweise um spannungsgesteuerte Oszillatoren. Derartige Oszillatoren können auf einfache Weise hinsichtlich ihrer Frequenz eingestellt werden.

Vorteilhafterweise sind der erste und der zweite Oszillator auf einen gemeinsamen Halbleiterchip realisiert. Hierdurch ergeben sich fertigungstechnische Vorteile. Die bei Realisierung von beiden Oszillatoren auf einen gemeinsamen Halbleiterchip bedingte räumliche Nähe und die damit verbundene Gefahr von Kopplungen und Interferenzen kann durch den erfindungsgemäßen Betrieb der beiden Oszillatoren auf unterschiedlichen Frequenzen sicher vermieden werden.

Durch die Verwendung von programmierbaren Frequenzteilern besteht eine relativ große Wahlfreiheit bei der Einstellung der Oszillatorfrequenz des ersten bzw. zweiten Oszillators.

Die direkte Kombination von zwei analogen Zwischenfrequenzsignalen in einem Phase-Diversity-Verfahren hat sich als aufwendig herausgestellt. Daher weist der Rundfunkempfänger vorteilhafterweise Analog-Digital-Wandler für die Zwischenfrequenzsignale auf, mit denen die analogen Zwischenfrequenzsignale in digitale Signale umgewandelt werden. Die digitalisierten Signale können dann in einem digitalen Signalprozessor zur Durchführung des Phase-Diversity-Verfahrens weiterverarbeitet werden.

Durch die Verwendung je eines Oszillators für jeden RF-Empfänger können vorteilhafterweise der erste und der zweite RF-Empfänger in einem ersten Betriebsmodus auf dieselbe Empfangsfrequenz und in einem zweiten Betriebsmoduls auf unterschiedliche Empfangsfrequenzen abgestimmt werden.

In einer weiteren Ausführungsform ist vorgesehen, dass der Rundfunkempfänger einen dritten RF-Empfänger enthält, wobei der erste und der zweite RF-Empfänger zur Verminderung von Empfangsstörungen mittels eines Phase-Diversity-Verfahrens aus dieselbe Empfangsfrequenz und der dritte RF-Empfänger zum Empfang von Zusatzinformationen eines Radiodatensystems, insbesondere von TMC-Informationen, auf eine davon abweichende Empfangsfrequenz abstimmbar ist. Diese Ausführungsform stellt ein besonders hochwertiges Autoradio zur Verfügung, bei dem Empfangsstörungen durch die Verwendung von zwei RF-Empfängern und des Phase-Diversity-Verfahrens stark vermindert werden und gleichzeitig TMC-Informationen auf einer anderen Sendefrequenz empfangen werden können.

In einer weiteren Ausgestaltung ist vorgesehen, dass der Rundfunkempfänger mindestens einen weiteren RF-Empfänger für den Empfang eines weiteren Rundfunkprogramms aufweist. Somit können beispielsweise Mitfahrer auf den Rücksitzen ein anderes Rundfunkprogramm hören als der Fahrer. Bei einem Rundfunkempfänger mit drei RF-Empfängern kann auch der dritte RF-Empfänger anstatt für den Empfang von TMC-Informationen für den Empfang des weiteren Rundfunkprogramms eingesetzt werden. Bei Verwendung von vier RF-Empfängern können der erste und der zweite RF-Empfänger für den Empfang eines ersten Rundfunksenders und zur Durchführung des erfindungsgemäßen Verfahrens und der dritte RF-Empfänger zum Empfang von TMC-Informationen, wie oben beschrieben, vorgesehen sein, während der vierte RF-Empfänger auf eine weitere Empfangsfrequenz zum Empfang eines weiteren Rundfunkprogramms abgestimmt ist. Mit vier RF-Empfängern lässt sich alternativ das erfindungsgemäße Verfahren auch für zwei unterschiedliche Empfangsfrequenzen durchführen. Mit fünf RF-Empfängern ist wiederum zusätzlich noch der Empfang von TMC-Informationen auf einer anderen Sendefrequenz möglich. Die Zahl der RF-Empfänger kann entsprechend weiter erhöht werden, wenn Empfang auf zusätzlichen Empfangsfrequenzen gewünscht wird.

Die Erfindung wird nachfolgend anhand eines Ausführungsbeispiels und der Zeichnung näher beschrieben. Es zeigen:
- Figur 1:: ein Prinzipschaltbild eines Doppeltuners mit zwei RF-Empfangswegen,
- Figur 2:: ein detailliertes Ausführungsbeispiel eines erfindungsgemäßen Doppeltuners,
- Figur 3:: ein Blockschaltbild eines Rundfunkempfängers.

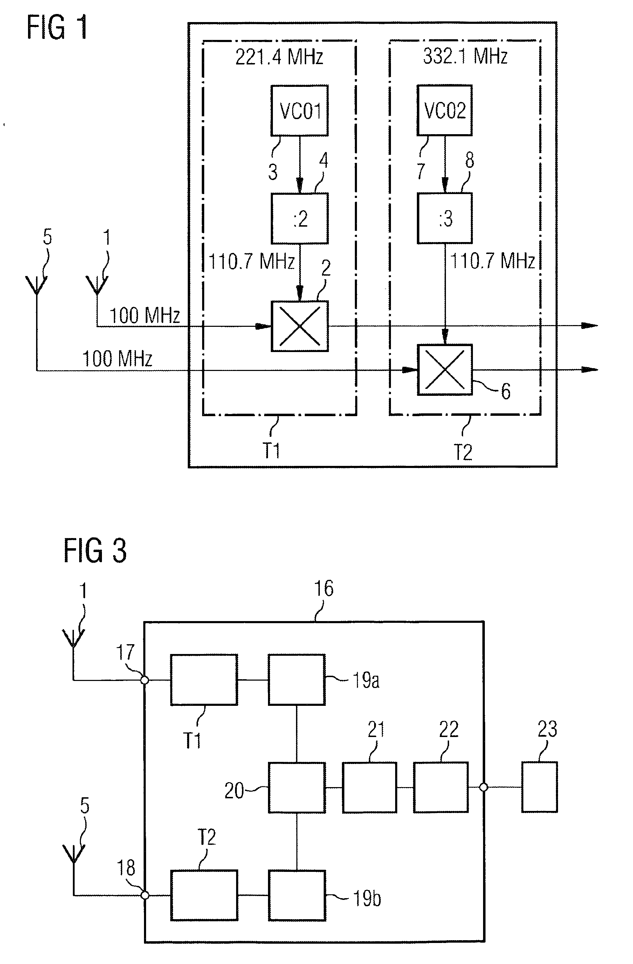

Figur 1 zeigt ein Blockschaltbild eines Doppeltuners mit zwei RF-Empfängern T1, T2. Das Antennensignal einer ersten Antenne 1 wird einem ersten Mischer 2 zur Erzeugung eines Zwischenfrequenzsignals zugeführt. Der erste RF-Empfänger T1 beinhaltet ferner einen ersten Oszillator 3, dessen Ausgangssignal über einen ersten Frequenzteiler 4 als Referenzsignal dem ersten Mischer 2 zugeführt wird.

Das Signal einer zweiten Antenne 5 wird einem zweiten Mischer 6 zur Erzeugung eines weiteren Zwischensignals zugeführt. Der zweite RF-Empfänger T2 beinhaltet neben dem zweiten Mischer 6 einen zweiten Oszillator 7 und einen zweiten Frequenzteiler 8. Das Ausgangssignal des zweiten Oszillators 7 wird über den Frequenzteiler 8, dem zweiten Mischer 6 als Referenzsignal zugeleitet.

Zur Durchführung eines Phase-Diversity-Verfahren zur Verminderung von Empfangsstörungen werden beide RF-Empfänger T1, T2 auf dieselbe Empfangsfrequenz abgestimmt. Dazu muss an beiden Mischern 2, 6 dieselbe Referenzfrequenz anliegen. Dies kann prinzipiell dadurch erfolgen, dass beide Oszillatoren 3, 7 auf dieselbe Frequenz eingestellt werden, wobei die Frequenzteiler 4, 8 entbehrlich werden oder das gleiche Teilungsverhältnis aufweisen müssten. Nachteilig hierbei ist allerdings, dass aufgrund geringster Unterschiede in den Frequenzen der beiden Oszillatoren 3, 7 Kopplungen und Interferenzen zwischen den Referenzsignalen auftreten, die sich negativ auf das Gesamtsystem auswirken. Erfindungsgemäß ist daher vorgesehen, dass der erste Oszillator 3 und der zweite Oszillator 7 mit unterschiedlicher Frequenz betrieben werden. Störende Interferenzen können dadurch vermieden werden. Um nun dennoch den beiden Mischern 2, 6 dieselbe Referenzfrequenz zur Verfügung zu stellen, sind die Frequenzteiler 4, 8 vorgesehen, die unterschiedliche Teilungsverhältnisse aufweisen und die Oszillatorfrequenzen der Oszillatoren 3, 7 auf dieselbe Referenzfrequenz für die Mischer 2, 6 herunterteilen.

Sollen die beiden RF-Empfänger T1, T2 beispielsweise auf eine Empfangsfrequenz von 100 MHz eingestellt werden, so muss die Empfangsfrequenz für die beiden Mischer 2, 6 zur Erzeugung eines Zwischenfrequenzsignals von 10,7 MHz auf eine Frequenz von 110,7 MHz eingestellt werden. Um dies bei dem ersten RF-Empfänger T1 zu erreichen, wird die Frequenz des ersten Oszillators 3 auf 221,4 MHz eingestellt und das Teilungsverhältnis des ersten Frequenzteils 4 auf "2". Die Frequenz des zweiten Oszillators 7 wird beispielhaft auf 332,1 MHz eingestellt, wobei durch Division durch 3 die Referenzfrequenz 110,7 MHz erzielt wird. Folglich ist das Teilerverhältnis des zweiten Frequenzteilers 8 auf "3" einzustellen.

Der erste und der zweite RF-Empfänger sind vorzugsweise auf einem gemeinsamen Halbleiterchip realisiert. Bei den hierbei auftretenden geringen Abständen zwischen den einzelnen Komponenten kann die erfindungsgemäße unterschiedliche Einstellung der Oszillatoren 3, 7 besonders vorteilhaft zur Vermeidung von Interferenzen eingesetzt werden. Die Integration der Oszillatoren 3, 7 als spannungsgesteuerte Oszillatoren (VCO) wird vereinfacht, wenn höhere Teilerverhältnisse verwendet werden. Die oben genannten Oszillatorfrequenzen und Teilerverhältnisse sind lediglich exemplarisch zur Erläuterung der erfindungsgemäßen Lehre anzusehen.

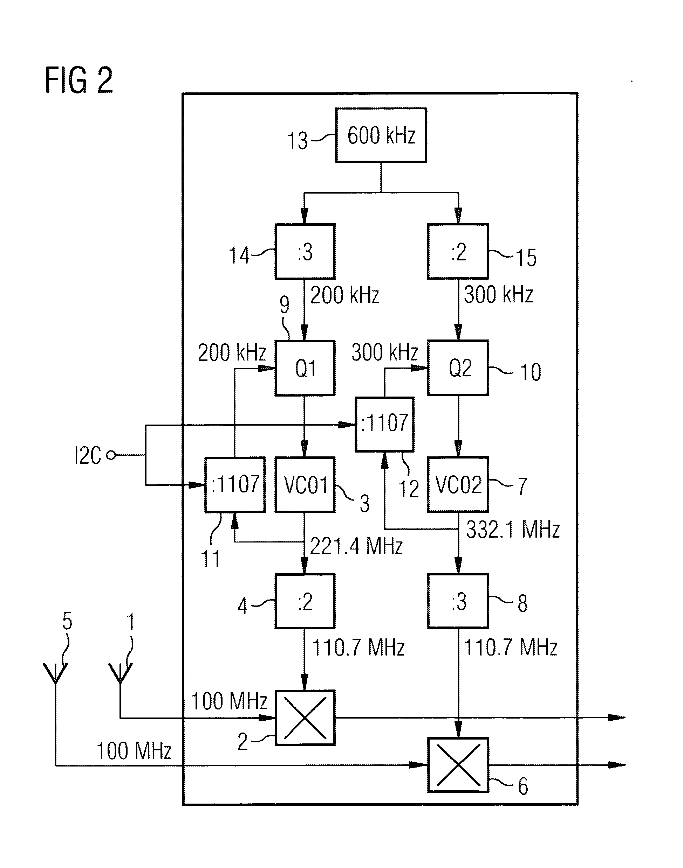

Figur 2 zeigt eine detailliertere Darstellung eines Doppeltuners mit zwei RF-Empfängern, die auf einem einzigen Chip realisiert sein können. Die Antennen 1, 5, die Mischer 2, 6, die Oszillatoren 3, 7 und die Frequenzteiler 4, 8 entsprechen den Komponenten gemäß Figur 1. Die Oszillatoren 3, 7 sind Bestandteile von PLL's (Phase-Locked-Loops). Die PLL's enthalten Phasendetektoren 9 bzw. 10 und programmierbare Teiler 11 bzw. 12. Die Phasendetektoren 9, 10 erhalten ihre Eingangssignale von einem gemeinsamen Schwingquarz, der als Referenzoszillator 13 dient. Die Ausgangsfrequenz des Referenzoszillators 13 wird in Teilern 14 bzw. 15, die unterschiedliche Teilungsverhältnisse aufweisen, heruntergeteilt, so dass den Phasendetektoren bereits unterschiedliche Frequenzen zugeführt werden. Die beiden programmierbaren Frequenzteiler 11, 12 innerhalb der PLL's sind auf das gleiche Teilerverhältnis von 1107 eingestellt. Die Ansteuerung der programmierbaren Frequenzteiler 11, 12 erfolgt von außen mittels einen entsprechenden Steuergerätes, beispielsweise über einen I2C-Bus.

Die Abstimmung des ersten RF-Empfängers auf eine Empfangsfrequenz von 100 MHz erfolgt nun folgendermaßen. Der Referenzoszillator 13 liefert eine Frequenz von 600 kHz, die durch den Frequenzteiler 14 durch Division durch 3 auf 200 kHz heruntergesetzt wird. Dieses Signal wird dem Phasendetektor als Referenzsignal zugeführt. Der Phasendetektor 9 vergleicht die Phase des vom Teiler 14 zugeführten Referenzsignals mit der Phase des durch den programmierbaren Frequenzteiler 11 herunter geteilten Signals des Oszillators 3. Ist beispielsweise die Referenzfrequenz des Phasendetektors 9, wie bereits erwähnt, 200 kHz und der programmierbare Teiler 7 weist ein Teilerverhältnis von 1107 auf, dann weist der Oszillators 3 eine Ausgangsfrequenz von 1107*200 kHz = 221,4 MHz auf. Das Ausgangssignal des Oszillators 3 mit einer Frequenz von 221,4 MHz wird in dem Frequenzteiler 4 um den Faktor 2 heruntergeteilt und bildet somit ein Referenzsignal mit einer Frequenz von 110,7 MHz für den Mischer 2.

In gleicher Weise erfolgt auch die Signalverarbeitung innerhalb des zweiten RF-Empfängers. Hier wird die Frequenz des Referenzoszillators 13 im Frequenzteiler 15 um den Faktor 2 heruntergeteilt, so dass sich eine Referenzfrequenz für den Phasendetektor 10 von 300 kHz ergibt. Das Teilungsverhältnis des programmierbaren Teilers 12 ist ebenso wie das Teilungsverhältnis des programmierbaren Teilers 11 auf einen Wert von 1107 eingestellt. Für den Oszillator 7 ergibt sich daraus ein Ausgangssignal mit einer Frequenz von 1107*300 kHz = 332,1 MHz. Die Frequenz des Signals des Oszillators 7 wird im Frequenzteiler 8 um den Faktor 3 herunter geteilt, so dass sich auch hier mit 110,7 MHz für den Mischer 6 dieselbe Referenzfrequenz einstellt wie für den Mischer 2 des ersten RF-Empfängers. Durch die Verwendung von spannungsgesteuerten Oszillatoren 3, 7 mit unterschiedlichen Frequenzen werden erfindungsgemäß Interferenzen und Kopplungen zwischen den beiden RF-Empfängern vermieden.

Die RF-Empfänger können in an sich bekannter Weise weitere Komponenten enthalten, insbesondere Bandpassfilter für die Zwischenfrequenzen.

Figur 3 zeigt ein Blockschaltbild eines Rundfunkempfängers 16, in dem der Doppeltuner erfindungsgemäß eingesetzt werden kann. Der Rundfunkempfänger 16 weist Antennensignaleingänge 17, 18 auf. Die Antennensignaleingänge 17, 18 sind mit den externen Antennen 1, 5 verbunden. Die an den Antennensignaleingängen 17, 18 anliegenden Antennensignale werden dem ersten bzw. zweiten RF-Empfänger T1, T2 zugeleitet, die wie zuvor anhand der Figuren 1 und 2 beschrieben, betrieben werden. Die Ausgangssignale der RF-Empfänger T1, T2 werden nach Digitalisierung in den A/D-Wandlern 19 einem digitalen Signalprozessor (DSP) 20 zugeführt. In dem DSP 20 werden die Signale der A/D-Wandler 19 miteinander verknüpft.

Das Ausgangssignal des DSP 20 wird einer Signalverarbeitungseinrichtung 21 zugeführt. In der Signalverarbeitungseinrichtung 21 wird in bekannter Weise aus dem Zwischenfrequenzsignal ein akustisches Signal gewonnen, das über einen oder mehrere Verstärker 22 einem oder mehreren Lautsprechern 23 zugeführt wird.

Die Verknüpfung der beiden Zwischenfrequenzsignale in dem DSP 20 wird nur dann durchgeführt, wenn die beiden RF-Empfänger T1, T2 auf der gleichen Empfangsfrequenz betrieben werden und eine Signalverbesserung nach dem Phase-Diversity-Verfahren erfolgen soll. Ist dies nicht der Fall, so können die beiden RF-Empfänger T1, T2 auf unterschiedlichen Empfangsfrequenzen betrieben werden und der Rundfunkempfänger somit beispielsweise zur Wiedergabe eines auf einer ersten Empfangsfrequenz empfangenen Rundfunkprogramms und zum Empfang von TMC-Daten auf einer zweiten Empfangsfrequenz vorgesehen sein.

## Patentansprüche

1. Rundfunkempfänger für den Mehrantennenempfang mit
- einem ersten RF-Empfänger (T1), der
- mit einer ersten Antenne (1) verbindbar ist und
- einen ersten Mischer (2) zur Erzeugung eines ersten Zwischenfrequenzsignals aus einem ersten Antennensignal und einem ersten Referenzsignal sowie
- einen ersten Oszillator (3) und einen ersten Frequenzteiler (4) zur Erzeugung der ersten Referenzfrequenz für den ersten Mischer (2) aufweist und
- einem zweiten RF-Empfänger (T2), der
- mit einer zweiten Antenne (5) verbindbar ist und
- einen zweiten Mischer (6) zur Erzeugung eines zweiten Zwischenfrequenzsignals aus einem zweiten Antennensignal und einem zweiten Referenzsignal sowie
- einen zweiten Oszillator (7) und einen zweiten Frequenzteiler (8) zur Erzeugung der zweiten Referenzfrequenz für den zweiten Mischer (6) aufweist,
wobei
- die Frequenzen des ersten und des zweiten Oszillators (3; 7) voneinander verschieden sind,
- die Teilungsverhältnisse des ersten und des zweiten Frequenzteilers (4; 8) derart voneinander verschieden sind, dass die erste und die zweite Referenzfrequenz gleich sind.

2. Rundfunkempfänger nach Anspruch 1, **dadurch gekennzeichnet, dass** es sich bei den Oszillatoren (3; 7) um spannungsgesteuerte Oszillatoren handelt.

3. Rundfunkempfänger nach Anspruch 1 oder 2, **dadurch gekennzeichnet, dass** der erste und der zweite Oszillator (3; 7) auf einem gemeinsamen Halbleiterchip realisiert sind.

4. Rundfunkempfänger nach einem der vorhergehenden Ansprüche, **dadurch gekennzeichnet, dass** die Frequenzteiler (4; 8) programmierbar sind.

5. Rundfunkempfänger nach einem der vorhergehenden Ansprüche, **dadurch gekennzeichnet , dass** der Rundfunkempfänger (16) Analog-Digital-Wandler (8) für die Zwischenfrequenzsignale aufweist.

6. Rundfunkempfänger nach einem der vorhergehenden Ansprüche, **dadurch gekennzeichnet, dass** der erste und der zweite RF-Empfänger (T1; T2) in einem ersten Betriebsmodus auf dieselbe Empfangsfrequenz und in einem zweiten Betriebsmodus auf unterschiedliche Empfangsfrequenzen abstimmbar sind.

7. Rundfunkempfänger nach einem der vorhergehenden Ansprüche, **dadurch gekennzeichnet, dass** der Rundfunkempfänger (16) einen dritten RF-Empfänger enthält, wobei der erste und der zweite RF-Empfänger zur Verminderung von Empfangsstörungen mittels eines Phase-Diversity-Verfahrens auf dieselbe Empfangsfrequenz und der dritte RF-Empfänger zum Empfang von Zusatzinformationen eines Radio-Daten-Systems, insbesondere TMC-Informationen, auf eine davon abweichende Empfangsfrequenz abstimmbar ist.

8. Rundfunkempfänger nach einem der vorhergehenden Ansprüche, dass der Rundfunkempfänger (16) mindestens einen weiteren RF-Empfänger für den Empfang eines weiteren Rundfunkprogramms aufweist.

9. Verfahren zur Erzeugung von Zwischenfrequenzsignalen in Rundfunkempfängern für Mehrantennenempfang mit mindestens zwei RF-Empfängern (T1; T2), wobei
- ein erstes Antennensignal einem ersten Mischer (2) zur Erzeugung eines ersten Zwischenfrequenzsignals und
- ein zweites Antennensignal einem zweiten Mischer (6) zur Erzeugung eines zweiten Zwischenfrequenzsignals zugeführt wird,
- ein von einem ersten Oszillator (3) und einem ersten Frequenzteiler (4) generiertes erstes Referenzfrequenzsignal dem ersten Mischer (2) zugeführt wird,
- ein von einem zweiten Oszillator (7) und einem zweiten Frequenzteiler (8) generiertes zweites Referenzfrequenzsignal dem zweiten Mischer (6) zugeführt wird,
- die Signalfrequenz des ersten und des zweiten Oszillators (3; 7) voneinander verschieden sind und
- im ersten und im zweiten Frequenzteiler (4; 8) voneinander verschiedene Teilungsverhältnisse derart eingestellt werden, dass das erste und das zweite Referenzfrequenzsignal dieselbe Frequenz aufweisen.

10. Verfahren nach Anspruch 9, **dadurch gekennzeichnet, dass** der erste und der zweite Oszillator (3; 7) spannungsgesteuerte Oszillatoren sind.

11. Verfahren nach einem der vorhergehenden Ansprüche, **dadurch gekennzeichnet, dass** die Zwischenfrequenzsignale digitalisiert werden.

12. Verfahren nach einem der vorhergehenden Ansprüche, **dadurch gekennzeichnet, dass** die Zwischenfrequenzsignale zur Durchführung einer Empfangsverbesserung mittels eines Phase-Diversity-Verfahrens kombiniert werden.

13. Verfahren nach einem der vorhergehenden Ansprüche, **dadurch gekennzeichnet, dass** die Teilungsverhältnisse der Frequenzteiler (4; 8) eingestellt werden.

## Claims

1. Radio receiver for reception with multiple antennas, having
- a first RF receiver (T1), which
- can be connected to a first antenna (1) and has
- a first mixer (2) for producing a first intermediate frequency signal from a first antenna signal and a first reference signal and
- a first oscillator (3) and a first frequency splitter (4) for producing the first reference frequency for the first mixer (2) and
- a second RF receiver (T2), which
- can be connected to a second antenna (5) and has
- a second mixer (6) for producing a second intermediate frequency signal from a second antenna signal and a second reference signal and
- a second oscillator (7) and a second frequency splitter (8) for producing the second reference frequency for the second mixer (6),
wherein
- the frequencies of the first and second oscillators (3; 7) are different from one another,
- the splitting ratios of the first and second frequency splitters (4; 8) are different from one another such that the first and second reference frequencies are identical.

2. Radio receiver according to claim 1, **characterised in that** the oscillators (3; 7) are voltage-controlled oscillators.

3. Radio receiver according to claim 1 or 2,
**characterised in that** the first and second oscillators (3; 7) are configured on a common semiconductor chip.

4. Radio receiver according to one of the preceding claims,
**characterised in that** the frequency splitters (4; 8) are programmable.

5. Radio receiver according to one of the preceding claims,
**characterised in that** the radio receiver (16) has analogue-digital converters (8) for the intermediate frequency signals.

6. Radio receiver according to one of the preceding claims,
**characterised in that** the first and second RF receivers (T1; T2) can be tuned to the same receive frequency in a first operating mode and to different receive frequencies in a second operating mode.

7. Radio receiver according to one of the preceding claims,
**characterised in that** the radio receiver (16) contains a third RF receiver, it being possible to tune the first and second RF receivers to the same receive frequency by means of a phase diversity method to reduce reception interference and to tune the third RF receiver to a different receive frequency to receive additional information from a radio data system, in particular TMC information.

8. Radio receiver according to one of the preceding claims,
**characterised in that** the radio receiver (16) has at least one further RF receiver for receiving a further radio programme.

9. Method for producing intermediate frequency signals in radio receivers for reception with multiple antennas having at least two RF receivers (T1; T2), wherein
- a first antenna signal is fed to a first mixer (2) to produce a first intermediate frequency signal and
- a second antenna signal is fed to a second mixer (6) to produce a second intermediate frequency signal,
- a first reference frequency signal generated by a first oscillator (3) and a first frequency splitter (4) is fed to the first mixer (2),
- a second reference frequency signal generated by a second oscillator (7) and a second frequency splitter (8) is fed to the second mixer (6),
- the signal frequencies of the first and second oscillators (3; 7) are different from one another and
- different splitting ratios are set in the first and second frequency splitters (4; 8) such that the first and second reference frequency signals have the same frequency.

10. Method according to claim 9, **characterised in that** the first and second oscillators (3; 7) are voltage-controlled oscillators.

11. Method according to one of the preceding claims,
**characterised in that** the intermediate frequency signals are digitised.

12. Method according to one of the preceding claims,
**characterised in that** the intermediate frequency signals are combined by means of a phase diversity method to improve reception.

13. Method according to one of the preceding claims,
**characterised in that** the splitting ratios of the frequency splitters (4; 8) are set.

## Revendications

1. Récepteur radio pour réception avec plusieurs antennes, comprenant
- un premier récepteur RF (T1) qui
- peut être relié à une première antenne (1) et comprend
- un premier mélangeur (2) pour produire un premier signal de fréquence intermédiaire à partir d'un premier signal d'antenne et d'un premier signal de référence, ainsi que
- un premier oscillateur (3) et un premier diviseur de fréquence (4) pour générer la première fréquence de référence pour le premier mélangeur (2) et
- un deuxième récepteur RF (T2) qui
- peut être relié à une seconde antenne (5) et comprend
- un second mélangeur (6) pour produire un second signal de fréquence intermédiaire à partir d'un second signal d'antenne et d'un second signal de référence, ainsi que
- un second oscillateur (7) et un second diviseur de fréquence (8) pour générer la seconde fréquence de référence pour le second mélangeur (6),
- les fréquences du premier et du second oscillateurs (3 ; 7) étant différentes l'une de l'autre,
- les rapports de division du premier et du second diviseurs de fréquence (4 ; 8) étant différents l'un de l'autre de manière à ce que la première et la seconde fréquences de référence soient égales.

2. Récepteur radio selon la revendication 1, **caractérisé en ce que** les oscillateurs (3 ; 7) sont des oscillateurs commandés par tension.

3. Récepteur radio selon la revendication 1 ou 2,
**caractérisé en ce que** le premier et le second oscillateurs (3 ; 7) sont réalisés sur une puce semiconductrice commune.

4. Récepteur radio selon l'une des revendications précédentes, **caractérisé en ce que** le diviseur de fréquence (4 ; 8) peut être programmé.

5. Récepteur radio selon l'une des revendications précédentes, **caractérisé en ce que** le récepteur radio (16) comprend des convertisseurs analogiques-numériques (8) pour les signaux de fréquence intermédiaire.

6. Récepteur radio selon l'une des revendications précédentes, **caractérisé en ce que** le premier et le deuxième récepteurs RF (T1 ; T2) peuvent être accordés sur la même fréquence de réception dans un premier mode de fonctionnement et sur des fréquences de réception différentes dans un second mode de fonctionnement.

7. Récepteur radio selon l'une des revendications précédentes, **caractérisé en ce que** le récepteur radio (16) comprend un troisième récepteur RF, le premier et le deuxième récepteurs RF pouvant être accordés sur la même fréquence de réception au moyen d'un procédé de diversité de phase pour réduire les perturbations de réception et le troisième récepteur RF pouvant être accordé sur une fréquence de réception différente de celle-ci pour recevoir des informations supplémentaires d'un système de données radio, notamment des informations TMC.

8. Récepteur radio selon l'une des revendications précédentes, **caractérisé en ce que** le récepteur radio (16) comprend au moins un autre récepteur RF pour la réception d'un autre programme radiophonique.

9. Procédé pour produire des signaux de fréquence intermédiaire dans des récepteurs radio pour réception avec plusieurs antennes, comprenant au moins deux récepteurs RF (T1 ; T2),
- un premier signal d'antenne étant amené à un premier mélangeur (2) pour produire un premier signal de fréquence intermédiaire et
- un second signal d'antenne étant amené à un second mélangeur (6) pour produire un second signal de fréquence intermédiaire,
- un premier signal de fréquence de référence généré par un premier oscillateur (3) et un premier diviseur de fréquence (4) étant amené au premier mélangeur (2),
- un second signal de fréquence de référence généré par un second oscillateur (7) et un second diviseur de fréquence (8) étant amené au second mélangeur (6),
- les fréquences de signal du premier et du second oscillateurs (3 ; 7) étant différentes l'une de l'autre et
- des rapports de division différents l'un de l'autre étant réglés dans le premier et dans le second diviseurs de fréquence (4 ; 8) de manière à ce que le premier et le second signaux de fréquence de référence aient la même fréquence.

10. Procédé selon la revendication 9, **caractérisé en ce que** le premier et le second oscillateurs (3 ; 7) sont des oscillateurs commandés en tension.

11. Procédé selon l'une des revendications précédentes, **caractérisé en ce que** les signaux de fréquence intermédiaire sont numérisés.

12. Procédé selon l'une des revendications précédentes, **caractérisé en ce que** les signaux de fréquence intermédiaire sont combinés au moyen d'un procédé de diversité de phase pour exécuter une amélioration de la réception.

13. Procédé selon l'une des revendications précédentes, **caractérisé en ce que** les rapports de division des diviseurs de fréquence (4 ; 8) sont réglés.
